# FASCICULE DE BREVET EUROPEEN

(11) **EP 2 682 174 B1**
(45) Date de publication et mention de la délivrance du brevet: **22.04.2015**
(21) Numéro de dépôt: 13175268.5
(22) Date de dépôt: 05.07.2013
(51) Int. Cl.: B01D 53/04, B01D 53/86, C01B 17/45

(54) **Dispositif de purification et procédé de régénération du SF6**
Reinigungsvorrichtung und Regenerierungsverfahren von SF6
Purification device and method for regenerating SF6

(30) Priorité: 05.07.2012 FR 1256455
(43) Date de publication de la demande: 08.01.2014
(73) Titulaire: Dehon S.A., 75011 Paris (FR)
(72) Inventeur: MICOZZI, Joseph, 13008 MARSEILLE (FR); MOROTE, Christophe, 34830 JACOU (FR)
(74) Mandataire: Gevers France

(56) Documents cités:
- EP-A1- 0 885 841
- DE-C1- 4 311 527
- FR-A- 1 450 646
- FR-A1- 2 616 688
- FR-A1- 2 732 608
- GB-A- 2 324 482

## Description

Le domaine de la présente invention est celui de l'industrie des matériels électriques et, plus particulièrement, celui des transformateurs à moyenne ou haute tension.

Les transformateurs de tension électrique tels que ceux mis en service par les sociétés de distribution électrique, sont généralement placés dans une enceinte sous atmosphère gazeuse inerte, pour éviter les conséquences des arcs électriques qui se produisent lors de leur enclenchement ou de leur coupure. Un gaz couramment utilisé pour cela est l'hexafluorure de soufre, de formule chimique SF6. Comme il comporte six liaisons covalentes, ce qui correspond à la valence maximale du soufre, il présente une stabilité exceptionnelle. En particulier, il peut être chauffé sans décomposition jusqu'à 500 °C en l'absence de métaux catalytiques; il est ininflammable ; l'hydrogène, le chlore et l'oxygène sont sans action sur lui ; il est insoluble dans l'eau et il n'est pas attaqué par les acides.

Il présente cependant un potentiel de réchauffement global (PRG ou GWP en anglais, pour Global Warming Potential) très élevé, ce qui fait qu'il ne doit pas être libéré dans l'atmosphère, faute de quoi il participerait de façon extrêmement importante à l'augmentation de l'effet de serre sur la planète.

Du fait de sa stabilité naturelle le SF6 absorbe l'énergie libérée lors du déclenchement d'un arc électrique dans le transformateur en se décomposant mais il se recombine aussitôt de façon naturelle. À la température d'un arc électrique, qui peut atteindre 15 000 K, une petite proportion de SF6 reste cependant décomposée. Des produits de décomposition se forment généralement à l'ouverture de contacts qui sont, le plus souvent, constitués d'alliages à base de tungstène, de cuivre ou de nickel. Par ailleurs il reste toujours certaines impuretés dans le SF6, comme de l'air, du CF4 ou de la vapeur d'eau. Enfin l'arc électrique se produit dans un environnement qui comporte des isolants constitués de matières plastiques à base de carbone, d'hydrogène ou de silice, ou bien encore d'autres matériaux métalliques ou non constituant l'appareil. De ce fait les produits de décomposition, qui sont solides ou gazeux, peuvent contenir, en dehors du soufre et du fluor, des éléments comme le carbone, le silicium, l'oxygène, l'hydrogène, le tungstène, le cuivre, etc.

Les principaux sous-produits gazeux générés par ces opérations sont ainsi de l'acide fluorhydrique HF, du dioxyde de carbone CO2, de l'anhydride sulfureux SO2, du tétrafluorure de carbone CF4, du tétrafluorure de silicium SiF4, du fluorure de thionyle SOF2, du tétrafluorure de thionyle SOF4, du fluorure de sulfuryle SO2F2, du tétrafluorure de soufre SF4 ou encore du décafluorure de soufre S2F10. On trouve également des produits solides de décomposition, sous forme de poudres, qui sont à base de tungstène, de cuivre ou de nickel. Mais, alors que le SF6 présente l'avantage de ne pas être toxique à l'état pur, les sous-produits générés par les arcs électriques le sont. Ils peuvent induire sur les opérateurs, même à faible dose, des modifications du comportement et des difficultés respiratoires.

Les sociétés gestionnaires des transformateurs sont donc obligées de mettre en place des mesures de sécurité pour leurs personnels qui manipulent du gaz SF6 après une utilisation prolongée. Le gaz est retiré de l'enceinte interne au transformateur et liquéfié par compression pour faciliter son stockage. Par ailleurs ce gaz étant d'un coût relativement élevé, des méthodes de recyclage après régénération ont été proposées. Celles-ci se font actuellement selon deux processus, en fonction du degré de pollution atteint par le gaz : un gaz peu pollué peut être régénéré sur le site d'exploitation du transformateur par un recyclage sur des installations mobiles ; un gaz plus pollué doit faire l'objet d'un retour en usine, chez le fabricant, pour subir des opérations de régénération plus lourdes. Enfin, dans le cas d'un niveau de pollution trop élevé, c'est-à-dire un taux de polluants supérieur en masse à 1,26%, le gaz n'est plus régénéré mais mis au rebut et détruit en usine.

Le circuit mis en place pour une régénération par le fabricant est consommateur de temps et générateur de contraintes logistiques et il serait souhaitable de pouvoir effectuer une régénération sur site d'un gaz pollué, pour autant que celui-ci reste à l'intérieur de la valeur limite de 1,26% de polluants.

Plusieurs techniques ont, par ailleurs, été proposées pour régénérer le SF6, que ce soit en phase liquide ou en phase gazeuse, qui prévoient le passage du gaz sur un ou sur plusieurs dépolluants en série. On peut noter à cet effet le brevet FR 1450646 qui préconise le passage du SF6 en phase gazeuse sur une lessive de potasse, ou bien sur, au choix, un lit d'alumine activée ou de chaux sodée. Ce document ne préconise pas d'association de plusieurs filtres en série ; il ne répond donc que partiellement au problème posé car il n'élimine pas tous les polluants susceptibles d'être rencontrés. On connait également la demande de brevet EP 0885841 qui préconise un passage successif sur des lits de chaux, de charbon actif et sur un tamis moléculaire.

Ces dispositifs préconisés se caractérisent par un résultat insuffisant car le premier n'est adapté qu'à la récupération du SO2F2, et le second ne retient pas certaines molécules et, en particulier, les molécules polaires ou comme les grosses molécules que sont le SF5 ou le S2F10.

La présente invention a, en conséquence, pour but de proposer un dispositif simple et peu couteux de traitement pour des gaz pollués du type SF6 ainsi qu'un procédé pour leur régénération, ce dispositif et ce procédé permettant l'élimination de tous les polluants susceptibles d'être rencontrés dans un transformateur électrique après un temps d'utilisation.

A cet effet, l'invention a pour objet un dispositif selon la revendication 1 pour l'élimination des polluants d'un fluide comportant une enceinte munie d'une succession de filtres disposés en série sur le chemin suivi par ledit fluide à l'intérieur de ladite enceinte, **caractérisé en ce qu'il** comporte séquentiellement au moins un premier filtre comportant un lit de chaux sodée et/ou de charbon actif, un second filtre comportant de l'alumine activée et un troisième filtre comportant un tamis moléculaire.

La combinaison de ces trois, voire quatre, filtres, permet d'éliminer pratiquement tous les polluants qu'il est classique de rencontrer dans un gaz pollué comme du SF6 après une utilisation prolongée dans un transformateur. Le lit d'alumine activée est essentiel car il permet de retenir certaines molécules que ne retiennent pas les autres dépolluants, comme les molécules polaires ou les grosses molécules (SF4, SF5 et S2F10, ...). Son positionnement en aval d'un lit de chaux sodée ou de charbon actif permet de le faire fonctionner dans un milieu déchargé de l'acidité procurée par certains polluants comme, par exemple, l'acide fluorhydrique HF. L'acidité, quelle que soit sa concentration, inhiberait le moment dipolaire des molécules de SOF2, SO2F2, SF4 et SOF4 et l'action de l'alumine activée serait fortement réduite.

Enfin le positionnement du tamis moléculaire en fin de cycle est nécessaire pour éviter qu'il soit rapidement saturé du fait de la taille de ses vides et que le processus soit stoppé, ce qui serait le cas s'il était positionné, par exemple, en première ou seconde position. Il peut alors remplir sa mission d'adsorption sélective.

Préférentiellement le premier filtre comporte un lit de chaux sodée, le dispositif comprenant en outre un lit de charbon actif.

Avantageusement le lit de chaux sodée est placé séquentiellement en amont du lit de charbon actif.

Dans un mode de réalisation particulier le lit d'alumine activée est positionné en aval du lit de chaux sodée et en amont du lit de charbon actif. On obtient ainsi une meilleure répartition de l'action entre l'alumine et le charbon actif et donc, in fine, une plus grande efficacité. La séquence optimale préconisée par l'invention est alors constituée par un lit de chaux sodée, un lit d'alumine activée, un lit de charbon actif et un tamis moléculaire.

Dans des modes préférentiels de réalisation ledit lit de chaux sodée a une épaisseur qui s'étend sur au moins deux fois sa largeur, ledit lit de charbon actif a une épaisseur supérieure ou égale à 60 cm, ledit lit d'alumine activée a une épaisseur qui s'étend sur au moins deux fois sa largeur, et/ou ledit tamis moléculaire a une épaisseur qui s'étend sur au moins deux fois sa largeur.

Le diamètre des vides du tamis moléculaire est compris entre 4 et 5 angstrôms.

Avantageusement le dispositif comporte en outre un filtre à particules en aval du troisième filtre, sur le chemin suivi par ledit fluide.

Dans un mode particulier de réalisation le dispositif comporte en outre un moyen de mise en mouvement dudit fluide au travers de ladite enceinte adapté à un fluide en phase liquide.

L'invention porte également sur un procédé, en phase liquide, de régénération de l'hexafluorure de soufre SF6 selon la revendication 11 utilisé pour former une atmosphère inerte dans une enceinte fermée et contenant des polluants résultants du déclenchement d'arc électriques dans ladite enceinte, **caractérisé en ce qu'il** comporte le passage dudit fluide au travers au moins trois filtres disposés en série, un premier filtre comportant un lit de chaux sodée et/ou de charbon actif, un second filtre comportant de l'alumine activée et un troisième filtre comportant un tamis moléculaire.

Ce procédé est parfaitement adapté à un gaz SF6 retiré d'un transformateur électrique pour lui faire subir une régénération par élimination des polluants, sur le site d'utilisation.

Préférentiellement le procédé comporte le passage du fluide au travers d'un lit de chaux sodée, préalablement à son passage au travers d'un lit de charbon actif. Avantageusement le procédé comporte le passage du fluide au travers d'un lit d'alumine activée postérieurement à son passage au travers dudit lit de chaux sodée et préalablement à son passage au travers d'un lit de charbon actif.

Dans un mode particulier de mise en oeuvre du procédé la vitesse d'avancement du fluide dans ladite enceinte est inférieure à 0,17m/min.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue schématique d'un dispositif de régénération du SF6 selon un mode de réalisation de l'invention ;
- la figure 2 est un tableau donnant les valeurs maximales admissibles de chacun des polluants pour une régénération du SF6 par le procédé selon l'invention ;
- la figure 3 est un tableau donnant les moyens adaptés à l'élimination des divers polluants susceptibles d'être rencontrés avec du SF6 pollué ;
- la figure 4 est un tableau donnant les résultats obtenus après régénération d'un SF6 pollué, à l'aide du dispositif de la figure 1.

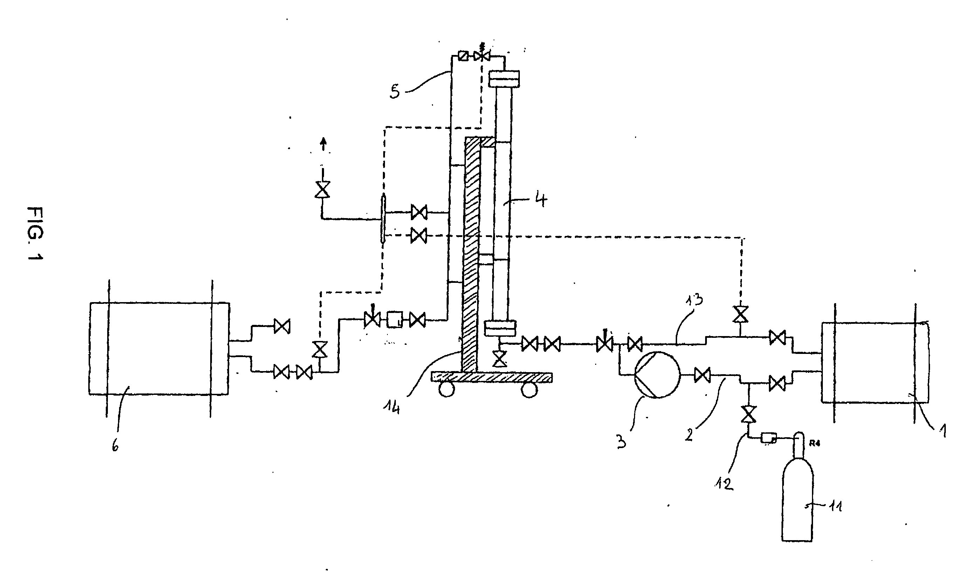

En se référant à la figure 1, on voit, de façon schématique, un dispositif de régénération d'un gaz SF6 qui a été pollué par une utilisation prolongée dans un transformateur électrique de moyenne ou haute tension. Ce gaz a été extrait d'un transformateur selon une technique classique, et connue de l'homme du métier, et est stocké, sous forme liquide, dans un conteneur source 1. Ce conteneur source est relié, via un circuit d'alimentation 2, sur lequel on trouve une pompe d'alimentation 3, à une colonne 4 qui constitue le dispositif de régénération proprement dit. Le fluide à régénérer entre dans la colonne 4 par sa partie basse pour en ressortir en partie haute et se diriger, via une canalisation d'évacuation 5, vers un conteneur récepteur 6, où il sera stocké, toujours sous une forme liquide, avant d'être livré pour une remise en service dans un transformateur. La totalité des opérations de régénération s'effectue ainsi à proximité du transformateur ou, à, défaut, sur le site de l'entreprise chargée de l'alimentation et de la distribution du courant électrique, sans avoir à être confiée à une entreprise spécialisée dans la régénération de ce gaz en usine.

Le circuit suivi par le fluide à régénérer comprend en outre d'autres éléments accessoires, comme un support 14 sur lequel est fixée la colonne 4, un réservoir d'azote 11 débouchant, via un circuit annexe 12, qui est fermé en utilisation normale par une vanne d'isolation, dans la canalisation d'alimentation 2 pour purger le circuit principal du SF6 qui y reste après utilisation. On trouve également un circuit de retour gazeux 13 qui relie, grâce à une vanne pointeau commandée manuellement, l'aval de la pompe 3 au conteneur source 1. Ce circuit de retour permet d'augmenter la pression dans le conteneur source pour forcer la circulation du fluide du conteneur source 1 vers le conteneur récepteur 6 lorsque le niveau de fluide dans le récepteur source devient trop faible et que la différence de pression entre les deux récepteurs est insuffisante. Sur le dispositif, tant en amont de la colonne 4 qu'en aval, on voit une pluralité de vannes d'isolement pour la gestion de la circulation des différents fluides se trouvant dans le circuit. On trouve aussi, classiquement, des vannes permettant d'effectuer soit un piquage pour analyser la composition chimique du fluide, soit un dégazage d'une portion du circuit.

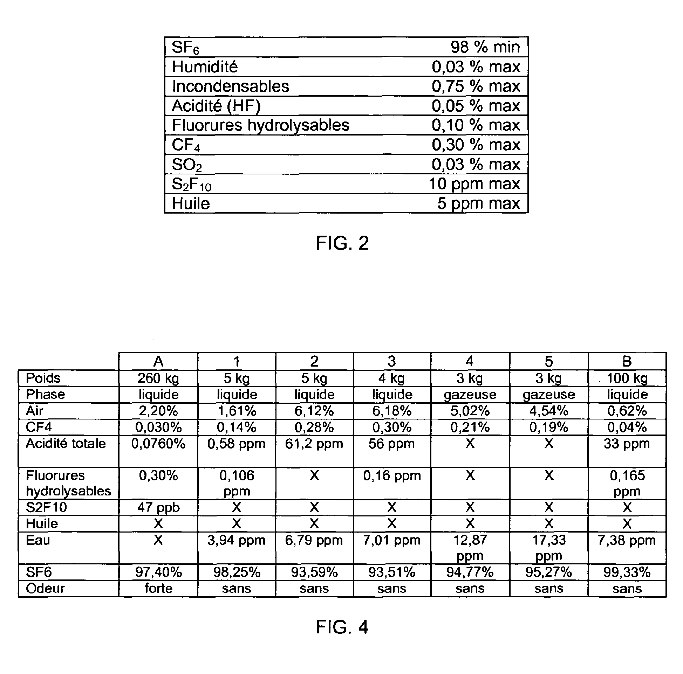

La figure 2 donne, pour chacun des polluants trouvés dans du SF6 après une utilisation dans un transformateur, les valeurs maximales admissibles pour effectuer une régénération. Au-delà de ces valeurs, le SF6 est considéré comme trop pollué et il est renvoyé en usine pour destruction. Ces valeurs fixent donc le niveau des performances que doit atteindre un dispositif et/ou un procédé de régénération selon l'invention.

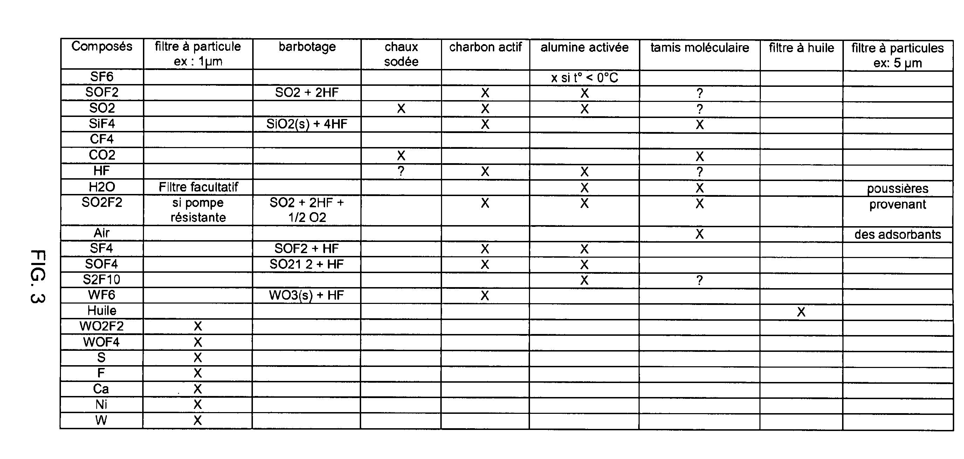

Le tableau de la figure 3 donne pour chacun des composés susceptible d'apparaître comme polluant dans du SF6 après une utilisation en transformateur, les diverses méthodes permettant de les piéger et ainsi de les éliminer au cours du processus de régénération du SF6 selon l'invention.

Les filtres à particules permettent de retenir les polluants qui sont sous forme solide, la taille de la maille du filtre (1 ou 5 microns) étant adaptée à la taille des particules à retenir.

Les brouillards d'huiles peuvent être retenus par un filtre à l'huile classique.

L'hydrolyse, ou barbotage dans de l'eau, est une technique qui peut être utilisée pour réduire certains produits de la décomposition du SF6 comme le SF4, le SOF4, le WF6 ou le SiF4. A l'issue de cette opération on obtient des composés, comme le SOF2 ou le SO2F2, qui se retrouvent déjà parmi les polluants à traiter, ou des composés sous forme solide, comme le WO3 ou le S102 qui peuvent être éliminés par des filtres à particules.

On voit sur le tableau que tous les polluants rencontrés habituellement dans du SF6 pollué, à l'exception toutefois du CF4, peuvent être éliminés par une opération d'adsorption que celle-ci s'effectue sur un lit formé soit de chaux sodée, soit de charbon actif, sur un lit d'alumine activée ou enfin sur un tamis moléculaire.

La chaux sodée permet de purifier le SF6 en réagissant avec la plupart des contaminants acides (H2S, COS, CO2, SO2, AsH3, HCl) et en particulier avec l'acide fluorhydrique HF. Son positionnement en amont permet, en l'éliminant l'acidité contenue dans le SF6, de faire fonctionner les dépolluants situés en aval de manière optimale.

Le charbon actif se caractérise par une surface apolaire ou très peu polaire et, de ce fait, possède une affinité importante pour les molécules organiques (alcools, cétones, aromatiques, aliphatiques) dont la plupart sont apolaires. En étant positionné en aval de la chaux sodée il n'est pas utilisé, si ce n'est de façon complémentaire à la chaux sodée, comme dé-acidifiant mais comme adsorbant de polluants.

L'alumine activée adsorbe en priorité les molécules d'eau et les molécules polaires provenant de la décomposition du SF6. Elle adsorbe par ailleurs les grosses molécules que sont le SF5 et le S2F10, comme on peut le voir sur la figure 3, ce que ne font pas les autres dépolluants. On remarque alors que la présence de ce lit d'alumine activée, en association avec les autres filtres, est essentielle pour une bonne efficacité du dispositif. L'association préconisée par l'invention assure ainsi une qualité de filtration qui n'était pas atteignable avec les dispositifs de l'art antérieur. Son positionnement en aval d'un lit, soit de chaux sodée soit de charbon actif, qui élimine l'acidité présente dans le SF6 pollué, est par ailleurs essentiel pour une efficacité maximale de l'alumine activée.

On note en revanche que l'alumine activée peut également adsorber des molécules de SF6 si la température de celui-ci est négative. Il convient donc d'éviter de telles températures au cours du processus de régénération, mais ces conditions ne se rencontrent pas naturellement, les réactions d'adsorption étant généralement exothermiques.

Il convient enfin de remarquer que l'alumine et le charbon actif ont, tous deux, un pouvoir adsorbant pour les molécules telles que le SOF2, le SO2F2, le SF4, le SOF4 ou le SO2. Cependant le pouvoir adsorbant du charbon actif est, pour chacun de ces produits, supérieur à celui de l'alumine activée. Il en résulte que dans le processus de régénération du SF6 il est préférable de positionner le lit d'alumine activée en amont de celui du charbon actif pour répartir la charge d'adsorption entre tous les composants de régénération.

Enfin les tamis moléculaires sont choisis principalement parmi les tamis de type 4A ou 5A, c'est à dire ceux dont le diamètre des vides est de 4 ou 5 angströms. Ainsi ils n'adsorbent pas les molécules de SF6, dont le diamètre est de l'ordre de 5,6 Å, et ne font pas baisser de façon intempestive la pression du SF6 dans les enceintes lorsqu'on fait baisser la température de celles-ci. Ils permettent d'adsorber les petites molécules et l'eau, alors que les plus grosses molécules, comme les SF5, S2F10 et SF4, sont adsorbés par l'alumine activée.

La figure 4 montre, sous forme d'un tableau, les résultats d'analyse sur le SF6 en sortie de la colonne 4, en plusieurs points du circuit et à plusieurs instants successifs au cours du remplissage d'un conteneur récepteur 6 à partir d'un conteneur source 1. Le point A correspond au SF6 pollué se trouvant dans le conteneur source 1, alors que le point B correspond à du SF6 traité, stocké dans le conteneur récepteur 6, après son traitement dans la colonne 4. On constate que les taux d'acidité et de fluorure hydrolysables sont très fortement réduits par rapport aux taux du SF6 issu du conteneur source 1, reflétant ainsi la performance du dispositif. En revanche les taux de CF4 et d'huile n'ont pas été significativement réduits, le dispositif ne comportant effectivement pas de filtre adapté à ces produits.

Selon le principe de l'invention, le SF6 pollué est poussé, sous une forme liquide, à l'intérieur de la colonne 4, par l'action de la pompe à air comprimé 3 ; il passe successivement au travers de tous les filtres formés par des lits d'adsorbants puis à travers un filtre à particules dont la maille a pour taille 5 microns, qui est positionné en sortie de la colonne 4. En haut de colonne le fluide ressort par la canalisation d'évacuation 5, qui l'amène dans le conteneur récepteur 6, toujours sous sa forme liquide, ce qui évite le besoin d'un compresseur et d'un système de reliquéfaction pour le stockage du produit, ce qui aurait été le cas si celui-ci avait été en phase gazeuse lors de sa filtration dans la colonne 4.

L'invention se caractérise essentiellement par un dispositif qui comporte une colonne 4 dans laquelle sont positionnés une succession de filtres et au travers desquels passe le liquide à traiter. Il est adapté à une régénération du SF6 sous une forme liquide, obtenue par pressurisation. A l'intérieur de la colonne 4 sont positionnés des lits successifs d'adsorbants, séparés par des séparateurs en tissus poreux, par exemple en coton. Ces lits d'adsorbants sont disposés selon un certain ordre, qui va être détaillé ci-dessous, et déposés selon une épaisseur précise. L'invention porte également sur le procédé de régénération qui utilise une telle succession de filtres.

Pour réaliser une régénération efficace l'invention préconise la succession de lits d'adsorbants suivante en phase liquide :
La colonne contient en premier lieu, c'est-à-dire au niveau de l'entrée du SF6 liquide, un premier lit dont l'objet est de supprimer les contaminants acides. En effet, d'une part, les tamis moléculaires, qui sont disposés plus en aval, supporteraient mal une acidité importante et, d'autre part, l'efficacité de l'alumine activée serait réduite.

Le premier lit est donc constitué par de la chaux sodée et/ou du charbon actif. Préférentiellement la désacidification est réalisée en deux étapes, sans que cette configuration soit obligatoire dans le cadre de l'invention ; un premier lit est réalisé en chaux sodée et un second lit, en charbon actif, est disposé en aval.

Pour être efficace l'invention préconise de donner au lit de chaux sodée une hauteur qui s'étende sur 2 à 4 fois sa largeur et au lit de charbon actif une hauteur minimale de 60 cm.

Au-dessus de la chaux sodée ou du charbon actif est positionné un lit d'alumine activée dont la hauteur est comprise entre 2 et 5 fois sa largeur.

Enfin tout en aval se trouve un tamis moléculaire, dont l'épaisseur est, elle aussi, comprise entre 2 et 5 fois sa largeur.

Compte tenu de ces caractéristiques le débit dans la colonne 4 peut être maintenu avec une vitesse d'avancement de l'ordre de 0,1 m/min, et donner des résultats satisfaisants comme le montrent les valeurs présentées sur le tableau de la figure 4. On respecte ainsi une limitation pratique des lits en charbon actif pour lesquels, en mode dynamique, la vitesse d'avancement doit rester inférieure à 10 m/h, soit 0,166 m/min. De même cette valeur d'avancement reste comprise dans les limites inférieure et supérieure, égales respectivement à 0,1 et 1 m/min, qui sont acceptables pour les tamis moléculaires et les lits d'alumine activée et de chaux sodée.

## Revendications

1. Dispositif pour l'élimination en phase liquide des polluants d'un fluide comportant une enceinte (4) munie d'une succession de filtres disposés en série sur le chemin suivi par ledit fluide à l'intérieur de ladite enceinte, le dispositif comportant séquentiellement au moins un premier filtre comportant un lit de chaux sodée et/ou de charbon actif, un second filtre comportant de l'alumine activée et un troisième filtre comportant un tamis moléculaire dont le diamètre des vides est compris entre 4 et 5 angströms.

2. Dispositif selon la revendication 1 dans lequel le premier filtre comporte un lit de chaux sodée, le dispositif comportant en outre un lit de charbon actif.

3. Dispositif selon la revendication 2 dans lequel le lit de chaux sodée est placé séquentiellement en amont du lit de charbon actif.

4. Dispositif selon la revendication 3 dans lequel le lit d'alumine activée est positionné en aval du lit de chaux sodée et en amont du lit de charbon actif.

5. Dispositif selon l'une des revendications 1 à 4 dans lequel ledit lit de chaux sodée a une épaisseur qui s'étend sur au moins deux fois sa largeur.

6. Dispositif selon l'une des revendications 1 à 5 dans lequel ledit lit de charbon actif a une épaisseur supérieure ou égale à 60 cm.

7. Dispositif selon l'une des revendications 1 à 6 dans lequel ledit lit d'alumine activée a une épaisseur qui s'étend sur au moins deux fois sa largeur.

8. Dispositif selon l'une des revendications 1 à 7 dans lequel ledit tamis moléculaire a une épaisseur qui s'étend sur au moins deux fois sa largeur.

9. Dispositif selon l'une des revendications 1 à 8 comportant en outre un filtre à particules en aval du troisième filtre, sur le chemin suivi par ledit fluide.

10. Dispositif selon l'une des revendications 1 à 9 comportant en outre un moyen (3) de mise en mouvement dudit fluide au travers de ladite enceinte (4) adapté à un fluide en phase liquide.

11. Procédé de régénération, en phase liquide, de l'hexafluorure de soufre SF6 utilisé pour former une atmosphère inerte dans une enceinte fermée (4) et contenant des polluants résultants du déclenchement d'arc électriques dans ladite enceinte, le procédé comportant le passage dudit fluide au travers au moins trois filtres disposés en série, un premier filtre comportant un lit de chaux sodée et/ou de charbon actif, un second filtre comportant de l'alumine activée et un troisième filtre comportant un tamis moléculaire dont le diamètre des vides est compris entre 4 et 5 angströms.

12. Procédé selon la revendication 11 comportant le passage du fluide au travers d'un lit de chaux sodée, préalablement à son passage au travers d'un lit de charbon actif.

13. Procédé selon la revendication 12 comportant le passage du fluide au travers d'un lit d'alumine activée postérieurement à son passage au travers dudit lit de chaux sodée et préalablement à son passage au travers d'un lit de charbon actif.

14. Procédé selon l'une des revendications 11 à 13 dans lequel la vitesse d'avancement du fluide dans ladite enceinte (4) est inférieure à 0,17m/min.

## Patentansprüche

1. Vorrichtung zum Entfernen von Schadstoffen aus einem Fluid in flüssiger Phase, umfassend einen Behälter (4), der mit einer Abfolge von Filtern versehen ist, die in Reihe auf dem Weg angeordnet sind, dem das Fluid im Innern des Behälters folgt, wobei die Vorrichtung nacheinander mindestens einen ersten Filter umfasst, der ein Natronkalk- und/oder Aktivkohlebett umfasst, einen zweiten Filter, der aktiviertes Aluminiumoxid umfasst, und einen dritten Filter, der ein Molekularsieb, dessen Porendurchmesser im Bereich zwischen 4 und 5 Ångström liegt, umfasst.

2. Vorrichtung nach Anspruch 1, wobei der erste Filter ein Natronkalkbett umfasst, wobei die Vorrichtung ferner ein Aktivkohlebett umfasst.

3. Vorrichtung nach Anspruch 2, wobei das Natronkalkbett stromaufwärts des Aktivkohlebetts angeordnet ist.

4. Vorrichtung nach Anspruch 3, wobei das Bett mit aktiviertem Aluminiumoxid stromabwärts des Natronkalkbetts und stromaufwärts des Aktivkohlebetts angeordnet ist.

5. Vorrichtung nach einem der Ansprüche 1 bis 4, wobei das Natronkalkbett eine Dicke aufweist, die mindestens das Zweifache seiner Breite ausmacht.

6. Vorrichtung nach einem der Ansprüche 1 bis 5, wobei das Aktivkohlebett eine Dicke von größer oder gleich 60 cm aufweist.

7. Vorrichtung nach einem der Ansprüche 1 bis 6, wobei das Bett mit aktiviertem Aluminiumoxid eine Dicke aufweist, die mindestens das Zweifache seiner Breite ausmacht.

8. Vorrichtung nach einem der Ansprüche 1 bis 7, wobei das Molekularsieb eine Dicke aufweist, die mindestens das Zweifache seiner Breite ausmacht.

9. Vorrichtung nach einem der Ansprüche 1 bis 8, die, auf dem Weg, dem das Fluid folgt, ferner stromabwärts des dritten Filters einen Partikelfilter umfasst.

10. Vorrichtung nach einem der Ansprüche 1 bis 9, die ferner ein Mittel (3) zum Antreiben der Bewegung des Fluids durch den Behälter (4) umfasst, das an ein Fluid in flüssiger Phase angepasst ist.

11. Verfahren zum Regenerieren, in flüssiger Phase, von Schwefelhexafluorid SF6, das verwendet wird, um eine inerte Atmosphäre in einem geschlossenen Behälter (4) zu bilden, und der Schadstoffe enthält, die aus dem Auslösen von Lichtbögen in dem Behälter resultieren, wobei das Verfahren den Durchgang des Fluids durch mindestens drei Filter umfasst, die in Reihe angeordnet sind, einen ersten Filter, der ein Natronkalk- und/oder Aktivkohlebett umfasst, einen zweiten Filter, der aktiviertes Aluminiumoxid umfasst, und einen dritten Filter, der ein Molekularsieb, dessen Porendurchmesser im Bereich zwischen 4 und 5 Ångström liegt, umfasst.

12. Verfahren nach Anspruch 11, das den Durchgang des Fluids durch ein Natronkalkbett vor seinem Durchgang durch ein Aktivkohlebett umfasst.

13. Verfahren nach Anspruch 12, das den Durchgang des Fluids durch ein Bett aus aktiviertem Aluminiumoxid nach seinem Durchgang durch das Natronkalkbett und vor seinem Durchgang durch ein Aktivkohlebett umfasst.

14. Verfahren nach einem der Ansprüche 11 bis 13, wobei die Vorschubgeschwindigkeit des Fluids in dem Behälter (4) kleiner als 0,17 m/Min. ist

## Claims

1. Device for the liquid phase elimination of pollutants from a fluid, comprising an enclosure (4) provided with a succession of filters arranged in series along the path travelled by said fluid within said enclosure, the device comprising, sequentially, at least a first filter comprising a bed of soda lime and/or active charcoal, a second filter comprising activated alumina and a third filter comprising a molecular sieve in which the diameter of the voids is between 4 and 5 ångströms.

2. Device according to claim 1, wherein the first filter comprises a bed of soda lime, the device further comprising a bed of active charcoal.

3. Device according to claim 2, wherein the bed of soda lime is placed sequentially upstream of the bed of active charcoal.

4. Device according to claim 3, wherein the bed of activated alumina is positioned downstream of the bed of soda lime and upstream of the bed of active charcoal.

5. Device according to one of claims 1 to 4, wherein the bed of soda lime has a thickness which extends over at least twice its width.

6. Device according to one of claims 1 to 5, wherein the bed of active charcoal has a thickness greater than or equal to 60 cm.

7. Device according to one of claims 1 to 6, wherein the bed of activated alumina has a thickness which extends over at least twice its width.

8. Device according to one of claims 1 to 7, wherein the molecular sieve has a thickness which extends over at least twice its width.

9. Device according to one of claims 1 to 8, further comprising a particle filter downstream of the third filter, along the path travelled by said fluid.

10. Device according to one of claims 1 to 9, further comprising means (3) for setting said fluid in motion through said enclosure (4) adapted to a fluid in liquid phase.

11. Method for the liquid phase regeneration of sulphur hexafluoride SF6 used to form an inert atmosphere in a sealed enclosure (4) and containing pollutants resulting from the triggering of electric arcs within said enclosure, the method comprising passing said fluid through at least three filters arranged in series, a first filter comprising a bed of soda lime and/or active charcoal, a second filter comprising activated alumina and a third filter comprising a molecular sieve in which the diameter of the voids is between 4 and 5 ångströms.

12. Method according to claim 11, comprising passing the fluid through a bed of soda lime, before passing it through a bed of active charcoal.

13. Method according to claim 12, comprising passing the fluid through a bed of activated alumina, after passing it through said bed of soda lime and before passing it through a bed of active charcoal.

14. Method according to one of claims 11 to 13, wherein the speed of advance of the fluid in said enclosure (4) is less than 0.17 m/min.
